# EUROPÄISCHE PATENTSCHRIFT

(11) **EP 2 814 991 B1**
(45) Veröffentlichungstag und Bekanntmachung des Hinweises auf die Patenterteilung: **03.04.2019**
(21) Anmeldenummer: 13704057.2
(22) Anmeldetag: 06.02.2013
(51) Int. Cl.: C21D 9/00, C21D 9/40, C21D 11/00, C21D 1/10, C21D 9/34, H05B 6/06, H05B 6/10

(54) **VERFAHREN UND ANORDNUNG ZUM VORSCHUB-RANDSCHICHTHÄRTEN**
METHOD AND ARRANGEMENT FOR PROGRESSIVE SURFACE HARDENING
PROCÉDÉ ET ENSEMBLE PERMETTANT UNE TREMPE SUPERFICIELLE À AVANCEMENT

(30) Priorität: 17.02.2012 DE 102012101304
(43) Veröffentlichungstag der Anmeldung: 24.12.2014
(73) Patentinhaber: thyssenkrupp Rothe Erde GmbH, 44137 Dortmund (DE)
(72) Erfinder: BURTCHEN, Marco, 59555 Lippstadt (DE); LANGELS, Mathieu, 59597 Erwitte (DE); STAKEMEIER, Bernd, 59597 Erwitte (DE)
(74) Vertreter: Loock, Jan Pieter
(86) Internationale Anmeldenummer: PCT/EP2013/052331
(87) Internationale Veröffentlichungsnummer: WO 2013/120744

(56) Entgegenhaltungen:
- EP-A2- 1 988 179
- JP-A- S 558 403
- ROLLMANN JOERG ET AL: "Development of new application fields for large roller bearings by developing a new slide way hardening process", TECHFORUM, THYSSEN-KRUPP AG, DE, no. July, 1 July 2005 (2005-07-01), pages 78-83, XP009123763, ISSN: 1612-2763

## Beschreibung

Die vorliegende Erfindung betrifft ein Verfahren zum induktiven Vorschub-Randschichthärten eines geschlossenen Kurvenzuges eines Werkstücks, insbesondere einer Lauffläche eines Lagerrings, wobei der geschlossene Kurvenzug und eine Härtevorrichtung, die einen Induktor und eine Brause aufweist, in einem Vorschubbetrieb relativ zueinander in einer Bearbeitungsrichtung bewegt werden, um den geschlossenen Kurvenzug ausgehend von einer Anfangszone bis zu einer Endzone zu härten, und wobei zwischen der Anfangszone und der Endzone eine ungehärtete Schlupfzone vorgesehen wird.

Die zu härtende Fläche wird unter der Härtevorrichtung durch den mit Wechselstrom beaufschlagten Induktor stark erwärmt. In Bearbeitungsrichtung ist dem Induktor eine Brause nachgelagert, aus der eine Kühlflüssigkeit zum Abschrecken auf die zuvor aufgeheizte Fläche aufgebracht wird. Bei den üblicherweise eingesetzten Materialien wird in einer Randschicht durch die Erwärmung ein möglichst homogener Austenit erzeugt, wobei dann durch die Abschreckung mit einer hohen Abkühlgeschwindigkeit ein möglichst hoher Anteil an Martensit gebildet wird. Die Einhärtungstiefe hängt dabei von der Temperaturverteilung in der Randschicht ab und kann beim Induktionshärten beispielsweise durch die Frequenz, die insbesondere zwischen 3 kHz und 8 kHz liegen kann, und die Leistung verändert werden.

Um den geschlossenen Kurvenzug, beispielsweise eine Lauffläche eines Lagerrings zu härten, kann der Kurvenzug kontinuierlich an einer feststehenden Härtevorrichtung vorbeibewegt werden. Genauso kann aber auch das Werkstück ruhen, während die Härtevorrichtung entlang der zu härtenden Oberfläche bewegt wird. Grundsätzlich besteht auch die Möglichkeit das Werkstück auf einem Träger aufzuspannen.

Bei Lagerringen für Großwälzlager hat sich ein Verfahren bewährt, bei dem der Lagerring an einer feststehenden Härtevorrichtung vorbeibewegt wird. Insbesondere kann der Lagerring senkrecht oder schräg angeordnet sein, wobei dann die Bewegung des Lagerrings über abstützende Rollen erfolgen kann.

Grundsätzlich besteht das Problem, dass bereits gehärtete Bereiche nicht erneut auf eine Temperatur aufgewärmt werden dürfen, bei der die Härteeigenschaften wieder verloren gehen. Bei einem geschlossenen Kurvenzug, beispielsweise einer Lauffläche eines Lagerrings, wird deshalb zwischen einer Anfangszone, an der mit der Härtung begonnen wird, und einer Endzone, die zuletzt gehärtet wird, eine ungehärtete Schlupfzone vorgesehen. Die ungehärtete Schlupfzone hat typischerweise eine Breite zwischen 10 mm und 20 mm, wobei es bei Wälzlagern bekannt ist, diese Schlupfzone zu hinterschleifen, damit dort die Wälzkörper nicht anliegen.

Um eine Schlupfzone mit vorgegebener Breite zu erzeugen, muss die Position der Härtevorrichtung gegenüber der zu härtenden Fläche beim Ein- und Ausschalten der Leistung der Härtevorrichtung bekannt sein. Üblicherweise wird anhand orientierender Versuche eine geeignete Länge der Schlupfzone an einem Bauteil ermittelt, wobei dann die entsprechenden Parameter zur Steuerung eines Antriebs und der Härtevorrichtung auf die weiteren Werkstücke übertragen werden.

Dabei ist jedoch zu berücksichtigen, dass bei den nachfolgenden Werkstücken die Breite der Schlupfzone aufgrund von Störeinflüssen variieren kann. Zunächst unterliegen die Werkstücke gewissen Toleranzen, so dass beispielsweise aufgrund etwas unterschiedlicher Durchmesser bei einem Lagerring sich auch ein unterschiedlicher Weg der Härtevorrichtung entlang der Lauffläche ergibt. Zusätzlich dehnt sich das Werkstück durch die Erwärmung mittels der Härtevorrichtung aus, wobei Schwankungen bei der thermischen Ausdehnung auch zu einer unterschiedlichen Länge der Schlupfzone führen können. Schließlich besteht das Problem, dass auch bei dem Antrieb der Härtevorrichtung bzw. des Werkstücks Ungenauigkeiten auftreten können. Wenn beispielsweise ein Lagerring in einer vertikalen Anordnung an seiner Unterseite auf Rollen abgestützt ist und von den Rollen angetrieben wird, führt ein Rutschen zwischen den Rollen und dem Lagerring auch zu einer Abweichung, wenn aus der Drehzahl bzw. der Drehposition der Rollen auf die Position des Lagerrings geschlossen wird.

Aus den Druckschriften DE 10 2005 006 701 B3, DE 10 2006 003 014 B1 und DE 10 2008 033 735 A1 sind Verfahren zum induktiven Randschichthärten einer Ringfläche eines Werkstücks bekannt. Bei diesem Verfahren wird eine Schlupfzone dadurch vermieden bzw. reduziert, dass zwei Induktoren eingesetzt werden, die ausgehend von einer Anfangszone gegenläufig bewegt werden. Die Anfangszone kann dabei vollständig gehärtet werden, weil durch beide Induktoren eine gleichmäßige oder zumindest weitgehend gleichmäßige Erwärmung erreicht werden kann. Die beiden Induktoren werden dann entgegengesetzt bewegt und kommen schließlich an der Endzone zusammen, die an der Ringfläche der Anfangszone gegenüberliegt. Auch die Endzone wird nur einmal erwärmt, wenn die beiden Induktoren sich von beiden Seiten annähern. Da die beiden Induktoren nicht beliebig eng aneinander herangebracht werden können, kann die Endzone zunächst mit einem Hilfsinduktor vorgewärmt werden. Nachteilig ist bei den beschriebenen Verfahren, dass insbesondere bei Großwälzlagern ein sehr erheblicher Aufwand hinsichtlich der Härtevorrichtung mit gegenläufigen Induktoren notwendig ist.

Aus der JP-S 558403 ist ein Verfahren und eine Vorrichtung zum induktiven Vorschubhärten von Großwälzlagern bekannt, wobei die Werkstücke auf einem Drehtisch angeordnet sind. Am Ende des Härtevorgangs wird der Startpunkt mittels eines Detektors erfasst, woraufhin die Vorschubgeschwindigkeit und die Induktorleistung reduziert werden, um die Breite der ungehärteten Schlupfzone zu minimieren.

Der vorliegenden Erfindung liegt die Aufgabe zugrunde, ein Verfahren zum induktiven Vorschub-Randschichthärten eines geschlossenen Kurvenzuges eines Werkstücks anzugeben, bei dem auch bei großen Werkstücken ein Vorgabewert für die Breite einer ungehärteten Schlupfzone mit einer hohen Genauigkeit eingehalten werden kann.

Zur Lösung dieser Aufgabe ist ausgehend von dem eingangs beschriebenen Verfahren zum Vorschub-Randschichthärten vorgesehen, dass eine gegenüber dem Werkstück ortsfeste Markierung angebracht wird, die Härtevorrichtung einen Sensor zur Erfassung der Markierung aufweist, der geschlossene Kurvenzug und die nicht aktive Härtevorrichtung relativ zueinander entlang der Bearbeitungsrichtung bewegt werden, bis der Sensor die Markierung erfasst, nach der Erfassung der Markierung durch den Sensor eine weitere Bewegung in Bearbeitungsrichtung erfolgt, bevor die Härtevorrichtung aktiviert wird, nachfolgend der Kurvenzug durch die Relativbewegung zwischen dem Kurvenzug und der aktiven Härtevorrichtung in dem Vorschubbetrieb gehärtet wird und die Markierung mittels des Sensors erneut erfasst und darauf die Härtevorrichtung direkt oder mit einer Verzögerung deaktiviert wird, wobei das Werkstück vertikal oder gegenüber der Vertikalen leicht verkippt angeordnet ist, das Werkstück an seiner Unterseite auf Rollen abgestützt wird und zumindest eine der Rollen durch einen Motor angetrieben wird. Erfindungsgemäß erfolgt eine direkte Bestimmung der Position des Werkstücks. Insbesondere wird die Markierung zweimal erfasst, um den Anfang und das Ende des Härtevorgangs festlegen zu können. Dabei ist zu berücksichtigen, dass zwischen dem Beginn und dem Ende der gehärteten Fläche die ungehärtete Schlupfzone freigelassen werden muss. Es ist deshalb vorgesehen, dass nach dem ersten Erfassen der Markierung durch den Sensor zunächst eine weitere Bewegung in Bearbeitungsrichtung erfolgt, bevor die Härtevorrichtung aktiviert wird. Aus dem Weg dieser weiteren Bewegung ergibt sich mittelbar die Breite der Schlupfzone. Dabei ist aber üblicherweise noch die Breite der Heizeinrichtung, also bei einer induktiven Erwärmung die Breite eines Induktors, zu berücksichtigen.

Der nach der ersten Erfassung der Markierung durch den Sensor vor der Aktivierung der Härtevorrichtung zurückgelegte Weg kann durch eine Zeitverzögerung gesteuert werden oder mit Hilfe der Antriebseinrichtung ermittelt werden. Da dieser zusätzliche Weg gegenüber der gesamten Länge des geschlossenen Kurvenzugs klein ist, spielen die Störfaktoren wie ein Durchrutschen des Antriebs, Maßabweichungen oder unterschiedliche thermische Ausdehnungen dabei nur eine untergeordnete Rolle. Eine besonders genaue und zuverlässige Steuerung des Härtevorgangs ist aber dann möglich, wenn bei dem ersten Erfassen der Markierung in Bearbeitungsrichtung gesehen der Anfang und das Ende der Markierung erkannt werden, wobei die Härtevorrichtung aktiviert wird, wenn das Ende der Markierung erkannt wird. Die Deaktivierung der Härtevorrichtung erfolgt dann zweckmäßigerweise bei dem erneuten Erfassen der Markierung, wenn der Anfang der Markierung erkannt wird. Durch eine solche Vorgehensweise können jegliche Störeinflüsse vollständig ausgeschlossen werden. Darüber hinaus kann eine sehr einfache Steuerung des Verfahrens realisiert werden.

Die Härtevorrichtung weist einen Induktor auf, der während des Härtens des Kurvenzuges mit einem Wechselstrom beaufschlagt wird, wobei die Härtevorrichtung des Weiteren eine in Bearbeitungsrichtung hinter dem Induktor angeordnete Brause zum Abschrecken aufweist. Insbesondere kann dem Induktor in Bearbeitungsrichtung auch ein Hilfsinduktor als Vorwärmer vorgelagert sein.

Um gerade bei großen Werkstücken, beispielsweise Lagerringen von Großwälzlagern, eine leichte Handhabung zu ermöglichen, kann die Härteeinrichtung ortsfest angeordnet sein, wobei der geschlossene Kurvenzug des Werkstücks mit einem Antrieb an der Härteeinrichtung vorbeibewegt wird. Wie bereits zuvor erläutert, haben sich bei Lagerringen Anordnungen bewährt, bei denen die Lagerringe in einer vertikalen oder einer gegenüber der vertikalen leicht verkippten Anordnung an ihrer Unterseite auf Rollen abgestützt sind, wobei der zu bearbeitende Lagerring auch mittels der Rollen gedreht werden kann.

Erfindungsgemäß ist die Markierung gegenüber dem Werkstück ortsfest angebracht. Damit ist gemeint, dass die relative Position der Markierung sich während des Härtevorgangs nicht gegenüber dem Werkstück ändert. So kann die Markierung unmittelbar an dem Werkstück angebracht sein. Wenn das Werkstück aber beispielsweise auf einen Träger aufgezogen wird, so kann die Markierung auch an dem Träger befestigt sein.

Als Markierung können auf dem Werkstück oder auf einem das Werkstück aufnehmenden Träger beispielsweise dunkle Flächen, Kerben oder dergleichen vorgesehen werden. Besonders bevorzugt ist jedoch eine Ausgestaltung, bei der die Markierung als separates Teil lösbar an dem Werkstück befestigt ist. Möglich ist beispielsweise eine klemmende oder je nach Material auch eine magnetische Fixierung. Es ergibt sich der Vorteil, dass eine solche Markierung bei der Fertigung mehrerer Werkstücke von dem vorherigen Werkstück abgenommen und auf das nachfolgende Werkstück aufgesetzt werden kann. Eine unzureichende oder fehlerhafte Markierung ist dabei ausgeschlossen.

Die Erfassung der Markierung kann beispielsweise optisch, insbesondere durch eine Lichtschranke, erfolgen. Bei einer als separates Teil aufgesetzten Markierung ist aber auch eine mechanische Erfassung möglich, die gerade auch unter sehr rauen Einsatzbedingungen besonders zuverlässig ist. Der Sensor ist dann als eine Art Taster ausgebildet, der die Anwesenheit der Markierung feststellen kann.

Gegenstand der Erfindung ist auch eine Anordnung zum induktiven Vorschub-Randschichthärten eines geschlossenen Kurvenzuges eines Werkstücks, die im besonderen Maße zur Durchführung des zuvor beschriebenen Verfahrens geeignet ist. Die Anordnung umfasst eine Härtevorrichtung, die einen Induktor und eine Brause aufweist, und einen Antrieb für eine Relativbewegung zwischen dem Werkstück und der Härtevorrichtung. Erfindungsgemäß umfasst die Härtevorrichtung einen Sensor zur Erfassung einer gegenüber dem Werkstück ortsfest, vorzugsweise an dem Werkstück angebrachten Markierung, wobei das Werkstück an seiner Unterseite auf Rollen abgestützt ist und durch zumindest eine der Rollen antreibbar ist.

Die Erfindung wird im Folgenden anhand einer lediglich ein Ausführungsbeispiel darstellenden Zeichnung erläutert. Es zeigen:
- **Fig. 1a - 1e**: verschiedene Schritte während eines Verfahrens zum Vorschub-Randschichthärten einer Lauffläche eines Lagerrings,
- **Fig. 2**: der Bereich der Lauffläche, in dem der Härtevorgang begonnen und beendet wird, wobei zwischen einer Anfangszone und einer Endzone eine ungehärtete Schlupfzone verbleibt.

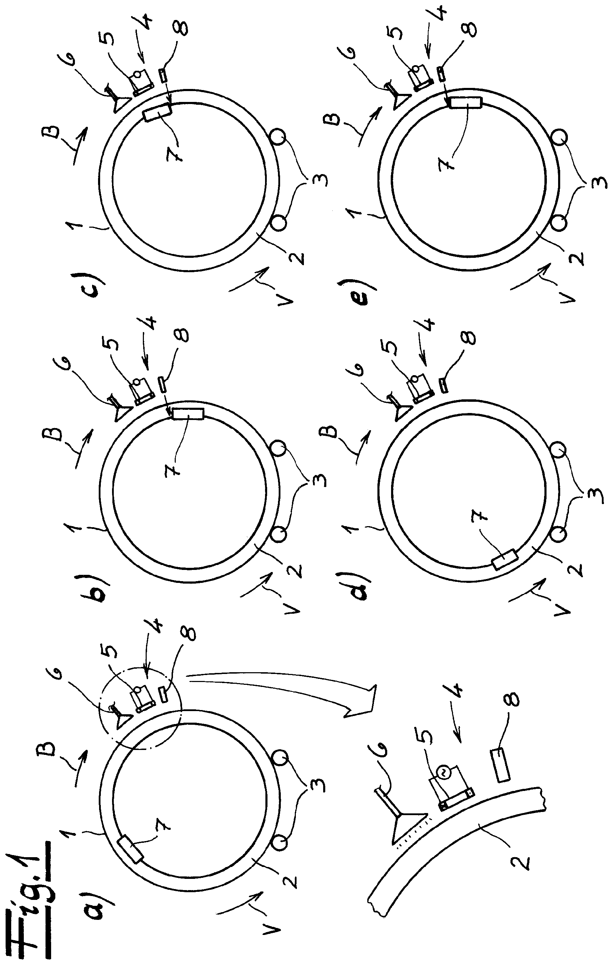

Die Fig. 1a zeigt eine Anordnung zum Vorschub-Randschichthärten eines geschlossenen Kurvenzuges 1 eines Werkstücks 2. In dem konkreten Ausführungsbeispiel soll die Lauffläche eines Lagerrings gehärtet werden, wobei das ringförmige Werkstück 2 vertikal oder im Wesentlichen vertikal ausgerichtet ist und an seiner Unterseite auf Rollen 3 abgestützt ist. Zumindest eine der Rollen 3 wird durch einen nicht dargestellten Motor angetrieben, so dass das ringförmige Werkstück 2 um seinen Umfang gedreht werden kann.

Die Anordnung umfasst des Weiteren eine Härtevorrichtung 4 zum Induktionshärten, welche einen Induktor 5 und eine in Bearbeitungsrichtung B dem Induktor 5 nachgelagerte Brause 6 aufweist. Die Bearbeitungsrichtung B bezeichnet die Richtung, in welche sich der Härtevorgang fortsetzt. Entsprechend ist bei der beschriebenen Bewegung des Werkstücks 2 bei einer feststehenden Härtevorrichtung 4 die Bearbeitungsrichtung B der Vorschubrichtung V entgegengesetzt.

Aus der Fig. 1a ist des Weiteren zu erkennen, dass an dem Werkstück 2 eine Markierung 7 als separates Teil angeordnet ist.

Die Fig. 1a zeigt das Werkstück 2 unmittelbar nach dem Auflegen auf die Rollen 3, wobei die Härtevorrichtung 4 noch inaktiv ist.

Das Werkstück 2 wird sodann in Vorschubrichtung V weitergedreht, bis die Markierung die Härtevorrichtung 4 erreicht. Die Härtevorrichtung 4 umfasst einen Sensor 8, der die Markierung 7 erfasst. In dem dargestellten Ausführungsbeispiel erkennt der Sensor 8 sowohl den Anfang (Fig. 1b) sowie das Ende der Markierung 7 (Fig. 1c), wobei die Härtevorrichtung 4 erst aktiviert wird, wenn der Sensor 8 das Ende der Markierung 7 erkannt hat. Der geschlossene Kurvenzug 1 des Werkstücks 2 wird dann in einem gleichmäßigen Vorschubbetrieb gehärtet (Fig. 1d), bis die Markierung 7 erneut den Sensor 8 erreicht (Fig. 1e). Die Härtevorrichtung 4 mit dem Induktor 5 wird sodann deaktiviert.

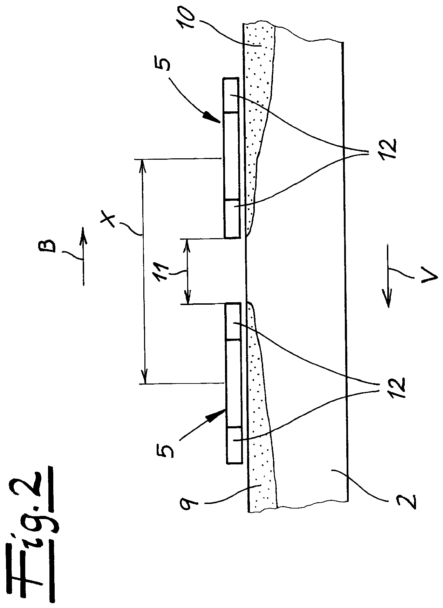

Gemäß der Fig. 2 kann durch die Markierung 7 eine zwischen einer Anfangszone 9 und einer Endzone 10 verbleibende Schlupfzone 11 mit einer hohen Genauigkeit und Reproduzierbarkeit eingestellt werden. Zur Verdeutlichung ist die Stellung des Induktors 5 zum Härtebeginn in der Anfangzone 9 sowie zum Härteende in der Endzone 10 dargestellt. Die Breite x der Markierung entspricht dabei dem Abstand zwischen der Startposition und der Endposition des Induktors. Dabei ist zu berücksichtigen, dass der Induktor üblicherweise eine Leiterschleife mit zwei parallelen Leiterabschnitten 12 aufweist. Die Breite der ungehärteten Schlupfzone 11 entspricht dabei in etwa der Breite x der Markierung 7 abzüglich der Breite des Induktors 5. Eine optimale Breite der Markierung 7 und damit der Schlupfzone 11 kann anhand von orientierenden Versuchen erfolgen. Erfindungsgemäß kann eine vorgegebene Breite der Schlupfzone 11 mit einer sehr hohen Genauigkeit und Reproduzierbarkeit eingehalten werden. In der Fig. 2 ist des Weiteren angedeutet, dass die Einhärtetiefe und die Härte an der Anfangszone 9 und der Endzone 10 jeweils in Richtung der Schlupfzone 11 abnehmen.

## Patentansprüche

1. Verfahren zum induktiven Vorschub-Randschichthärten eines geschlossenen Kurvenzuges (1) eines Werkstücks (2), insbesondere einer Lauffläche eines Lagerrings, wobei der geschlossene Kurvenzug (1) und eine Härtevorrichtung (4), die einen Induktor (5) und eine Brause (6) aufweist, in einem Vorschub- betrieb relativ zueinander in einer Bearbeitungsrichtung (B) bewegt werden, um den geschlossenen Kurvenzug (1) ausgehend von einer Anfangszone (9) bis zu einer Endzone (10) zu härten, und wobei zwischen der Anfangszone (9) und der Endzone (10) eine ungehärtete Schlupfzone (11) vorgesehen wird **dadurch gekennzeichnet, dass** eine gegenüber dem Werkstück (2) ortsfeste Markierung (7) angebracht wird, die Härtevorrichtung (4) einen Sensor (8) zur Erfassung der Markierung (7) aufweist, der geschlossene Kurvenzug (1) und die nicht aktive Härtevorrichtung (4) relativ zueinander entlang der Bearbeitungsrichtung (B) bewegt werden, bis der Sensor (8) die Markierung (7) erfasst, nach der Erfassung der Markierung (7) durch den Sensor (8) eine weitere Bewegung in Bearbeitungsrichtung (B) erfolgt, bevor die Härtevorrichtung (4) aktiviert wird, nachfolgend der Kurvenzug (1) durch die Relativbewegung zwischen dem Kurvenzug (1) und der aktiven Härtevorrichtung (4) in dem Vorschubbetrieb gehärtet wird und die Markierung (7) mittels des Sensors (8) erneut erfasst und darauf die Härtevorrichtung (4) deaktiviert wird, wobei das Werkstück vertikal oder gegenüber der Vertikalen leicht verkippt angeordnet ist, das Werkstück an seiner Unterseite auf Rollen abgestützt wird und zumindest eine der Rollen durch einen Motor angetrieben wird.

2. Verfahren nach Anspruch 1 , **dadurch gekennzeichnet, dass** bei dem ersten Erfassen der Markierung (7) in Bearbeitungsrichtung (B) gesehen der Anfang und das Ende der Markierung (7) erkannt werden, wobei die Härtevorrichtung (4) aktiviert wird, wenn das Ende der Markierung (7) erkannt wird.

3. Verfahren nach Anspruch 2, **dadurch gekennzeichnet, dass** die Härte- Vorrichtung (4) bei dem erneuten Erfassen der Markierung (7) deaktiviert wird, wenn der Anfang der Markierung (7) erkannt wird.

4. Verfahren nach einem der Ansprüche 1 bis 3, **dadurch gekennzeichnet, dass** dem Induktor (5) in Bearbeitungsrichtung (B) gesehen ein Hilfsinduktor als Vor- wärmer vorgelagert ist.

5. Verfahren nach einem der Ansprüche 1 bis 4, **dadurch gekennzeichnet, dass** die Härteeinrichtung ortsfest angeordnet ist, wobei der geschlossene Kurvenzug (1) des Werkstücks (2) mit einem Antrieb an der Härteeinrichtung (4) vor- beigeführt wird.

6. Anordnung zum induktiven Vorschub-Randschichthärten eines geschlossenen Kurvenzuges (1) eines Werkstücks (2), insbesondere zur Durchführung des Verfahrens nach einem der Ansprüche 1 bis 5, mit einer Härtevorrichtung (4), die einen Induktor (5) und eine Brause (6) aufweist, und mit einem Antrieb für eine Relativbewegung zwischen dem Werkstück (2) und der Härtevorrichtung (4) **dadurch gekennzeichnet, dass** die Härtevorrichtung (4) einen Sensor (8) zur Erfassung einer gegenüber dem Werkstück (2) ortsfest angebrachten Markierung (7) umfasst, wobei das Werkstück vertikal oder gegenüber der Vertikalen leicht verkippt angeordnet und an seiner Unterseite auf Rollen abgestützt ist und durch zumindest eine der Rollen antreibbar ist.

7. Anordnung nach Anspruch 6, **dadurch gekennzeichnet, dass** die Markierung (7) als separates Teil lösbar an dem Werkstück (2) befestigt ist.

## Claims

1. Method for the progressive induction surface hardening of a closed curve trace (1) of a workpiece (2), particularly a running surface of a bearing ring, the closed curve trace (1) and a hardening device (4), which has an inductor (5) and a spray (6), being moved relative to one another in a direction of treatment (B) in a feeding mode, in order to harden the closed curve trace (1) from an initial zone (9) to an end zone (10), and an unhardened slip zone (11) being provided between the initial zone (9) and the end zone (10), **characterized in that** a marking (7) that is fixed in place with respect to the workpiece (2) is applied, the hardening device (4) has a sensor (8) for sensing the marking (7), the closed curve trace (1) and the non-active hardening device (4) are moved relative to one another along the direction of treatment (B) until the sensor (8) senses the marking (7), after the sensing of the marking (7) by the sensor (8) a further movement takes place in the direction of treatment (B) before the hardening device (4) is activated, after that the curve trace (1) is hardened by the relative movement between the curve trace (1) and the active hardening device (4) in the feeding mode, and the marking (7) is sensed once again by means of the sensor (8) and then the hardening device (4) is deactivated, the workpiece being arranged vertically or tilted slightly with respect to the vertical, the workpiece being supported on its underside on rollers, and at least one of the rollers being driven by a motor.

2. Method according to Claim 1, **characterized in that**, on the first sensing of the marking (7), seen in the direction of treatment (B), the beginning and the end of the marking (7) are detected, the hardening device (4) being activated when the end of the marking (7) is detected.

3. Method according to Claim 2, **characterized in that** the hardening device (4) is deactivated on renewed sensing of the marking (7), when the beginning of the marking (7) is detected.

4. Method according to one of Claims 1 to 3, **characterized in that** a supplementary inductor is arranged as a preheater upstream of the inductor (5), as seen in the direction of treatment (B).

5. Method according to one of Claims 1 to 4, **characterized in that** the hardening device is arranged such that it is fixed in place, the closed curve trace (1) of the workpiece (2) being moved past the hardening device (4) by a drive.

6. Arrangement for the progressive induction surface hardening of a closed curve trace (1) of a workpiece (2), in particular for carrying out the method according to one of Claims 1 to 5, with a hardening device (4), which has an inductor (5) and a spray (6), and with a drive for the relative movement between the workpiece (2) and the hardening device (4), **characterized in that** the hardening device (4) comprises a sensor (8) for sensing a marking (7) applied such that it is fixed in place with respect to the workpiece (2), the workpiece being arranged vertically or tilted slightly with respect to the vertical and being supported on its underside on rollers and being driveable by at least one of the rollers.

7. Arrangement according to Claim 6, **characterized in that** the marking (7) is detachably fixed to the workpiece (2) as a separate part.

## Revendications

1. Procédé destiné à la trempe superficielle inductive à avancement d'une courbe fermée (1) d'une pièce à usiner (2), notamment d'une surface de roulement d'une bague de roulement, la courbe fermée (1) et un dispositif de trempe (4), qui comporte un inducteur (5) et une douche (6) étant déplacés l'un par rapport à l'autre dans un mode d'avance dans une direction d'usinage (B), pour tremper la courbe fermée (1) en partant d'une zone de début (9) jusqu'à une zone de fin (10) et entre la zone de début (9) et la zone de fin (10) étant prévue une zone de glissement (11) non trempée, **caractérisé en ce qu'**on appose un marquage (7) stationnaire, au regard de la pièce à usiner (2), le dispositif de trempe (4) comporte un capteur (8) destiné à détecter le marquage (7), en la courbe fermée (1) et le dispositif de trempe (4) non actif sont déplacés l'un par rapport à l'autre le long de la direction d'usinage (B) jusqu'à ce que le capteur (8) détecte le marquage (7), après la détection du marquage (7) par le capteur (8), il s'effectue un autre déplacement dans la direction d'usinage (B), avant que l'on n'active le dispositif de trempe (4), par la suite, la courbe (1) est trempée, par le déplacement relatif entre la courbe (1) et le dispositif de trempe (4) actif dans le mode d'avance et le marquage (7) est à nouveau détecté par le capteur (8), et suite à cela, le dispositif de trempe (4) est désactivé, la pièce à usiner étant placée en étant légèrement basculée à la verticale ou par rapport à la verticale, sur sa face inférieure, la pièce à usiner étant appuyée sur des galets et au moins l'un des galets étant entraîné par un moteur.

2. Procédé selon la revendication 1, **caractérisé en ce que** lors de la première détection du marquage (7), vus dans la direction d'usinage (B), le début et la fin du marquage (7) sont détectés, le dispositif de trempe (4) étant activé lors de la détection de la fin du marquage (7).

3. Procédé selon la revendication 2, **caractérisé en ce que** lors de la détection réitérée du marquage (7), le dispositif de trempe (4) est désactivé lorsque le début du marquage (7) est détecté.

4. Procédé selon l'une quelconque des revendications 1 à 3, **caractérisé en ce que**, vu dans la direction d'usinage (B), un inducteur auxiliaire est monté en amont de l'inducteur (5) en tant que préchauffeur.

5. Procédé selon l'une quelconque des revendications 1 à 4, **caractérisé en ce que** le système de trempe est placé de manière stationnaire, la courbe fermée (1) de la pièce à usiner (2) étant amenée devant le dispositif de trempe (4) à l'aide d'un entraînement.

6. Agencement destiné à la trempe superficielle inductive à avancement d'une courbe fermée (1) d'une pièce à usiner (2), notamment destiné à réaliser le procédé selon l'une quelconque des revendications 1 à 5, pourvu d'un dispositif de trempe (4), qui comporte un inducteur (5) et une douche (6) et pourvu d'un entraînement pour un déplacement relatif entre la pièce à usiner (2) et le dispositif de trempe (4), **caractérisé en ce que** le dispositif de trempe (4) comprend un capteur (8) destiné à détecter un marquage (7) apposé de manière stationnaire au regard de la pièce à usiner (2), la pièce à usiner étant placée en étant légèrement basculée à la verticale ou par rapport à la verticale et sur sa face inférieure étant appuyée sur des galets et étant susceptible d'être entraînée par au moins l'un des galets.

7. Agencement selon la revendication 6, **caractérisé en ce que** le marquage (7) est fixé de manière amovible sur la pièce à usiner (2) sous la forme d'une pièce séparée.
